Europäisches Patentamt

European Patent Office

Office européen des brevets

(11) Veröffentlichungsnummer: **0 318 648**

**A2**

(12) **EUROPÄISCHE PATENTANMELDUNG**

(21) Anmeldenummer: **88114547.8**

(22) Anmeldetag: **07.09.88**

(51) Int. Cl.⁴: **H04M 15/28**

(30) Priorität: **16.11.87 DE 3738846**

(43) Veröffentlichungstag der Anmeldung:
**07.06.89 Patentblatt 89/23**

(84) Benannte Vertragsstaaten:
**CH ES FR IT LI NL**

(71) Anmelder: **TELENORMA Telefonbau und Normalzeit GmbH**
**Mainzer Landstrasse 128-146**
**D-6000 Frankfurt am Main(DE)**

(72) Erfinder: **Lauer, Walter, Dipl.-Ing, TH.**
**Emmerich-Josef-Strasse 52**
**D-6230 Frankfurt/Main 80(DE)**
Erfinder: **Ritter, Gerd-Michael, Dipl.-ing. FH.**
**Coventrystrasse 32**
**D-6230 Frankfurt/Main 80(DE)**

(54) Gebührenimpulsempfänger für Fernmelde-insbesondere Fernsprechanschlussleitungen.

(57) Mit dem Gebührenimpulsempfänger soll die Frequenz und die Länge eines echten Gebührenimpulses eindeutig erkannt werden können, ohne daß dazu aus Spulen und Kondensatoren bestehende Schwingkreise erforderlich sind.

Der Gebührenimpulsempfänger besteht aus mehreren in Reihe geschalteten nachtriggerbaren monostabilen Flip-Flops, deren Zeitkonstanten so eingestellt und aufeinander abgestimmt sind, daß nur ein Gebührenimpuls ausreichender Länge mit der richtigen Frequenz ein Ausgangssignal bewirken kann.

Der Gebührenimpulsempfänger läßt sich für verschiedene Frequenzbereiche anwenden und einstellen, ohne daß abzustimmende Bandpaßanordnungen notwendig sind.

Fig. 1

EP 0 318 648 A2

## Gebührenimpulsempfänger für Fernmelde-, insbesondere Fernsprechanschlußleitungen

Die Erfindung betrifft einen Gebührenimpulsempfänger für Fernmelde-, insbesondere Fernsrpechanschlußleitungen nach dem Oberbegriff des Patentanspruches 1.

Aus der DE-AS 23 37 107 ist eine Empfangseinrichtung für über Fernmelde-, insbesondere Fernsprechleitungen übertragene Wechselspannungsimpulse, z.B. 16-kHz-Zählimpulse bekannt. Es ist ein Bandpaß vorgesehen, um die vorgegebene Frequenz richtig erkennen zu können. Mit einer nachgeschalteten, aus Schmitt-Triggern, monostabilen und bistabilen Kippstufen (Flip-Flops) und Gattern bestehenden Logikanordnung wird erreicht, daß Störimpulse im bereits mit richtiger Frequenz erkannten Signal nicht zu einem Ausgangssignal führen. Es werden also zu kurze Gebührenimpulse oder auch kurze Unterbrechungen während eines Gebührenimpulses unterdrückt, so daß ein einwandfreier Signalempfang gewährleistet ist. Bei der in der DE-AS 23 37 107 beschriebenen Empfangseinrichtung ist außer der erwähnten Logikanordnung zusätzlich ein Bandpaß zur Frequenzerkennung erforderlich, der auf die zu empfangende Frequenz abgestimmt werden muß.

Die Aufgabe der vorliegenden Erfindung besteht darin, einen Gebührenimpulsempfänger für Fernmelde-, insbesondere Fernsprechanschlußleitungen vorzusehen, der lediglich aus einer Logikanordnung besteht, womit sowohl die Frequenz als auch die Impulslänge richtig erkannt werden kann, damit ein im allgemeinen aus Spulen und Kondensatoren bestehendes Bandpaß-Filter nicht erforderlich ist.

Zur Lösung dieser Aufgabe sind Merkmale vorgesehen, wie sie im Patentanspruch 1 beschrieben sind.

Damit wird in vorteilhafter Weise erreicht, daß nur eine aus Logikelementen (integrierten Schaltkreisen) bestehende Schaltungsanordnung erforderlich ist, deren zeitliches Verhalten auf die jeweilige Frequenz und die Impulsdauer des angebotenen Gebührenimpuls einstellbar ist. Es sind also keine aufwendigen Bandpaß- und Filteranordnungen erforderlich, die auf vorgegebener Frequenzen individuell abgestimmt werden müssen. Besonders dann, wenn Gebührenimpulse mit niedrigen Frequenzen angeboten werden, ist ein derartiger Gebührenimpulsempfänger von Vorteil, weil dann analoge Bandpaß-Anordnungen wegen der erforderlichen hohen Induktivitäten relativ viel Platz beanspruchen.

Die in den Unteransprüchen angegebenen Weiterbildungen der Erfindung geben Maßnahmen an, womit eine erhöhte Sicherheit beim Erkennen von Gebührenimpulsen erreicht wird.

Ein Ausführungsbeispiel der Erfindung wird nachfolgend anhand von Zeichnungen näher erläutert.
Es zeigt:

Fig. 1 das Prinzipschaltbild eines Gebührenimpulsempfängers,

Fig. 2 ein Zeitdiagramm für verschiedene Impulsarten.

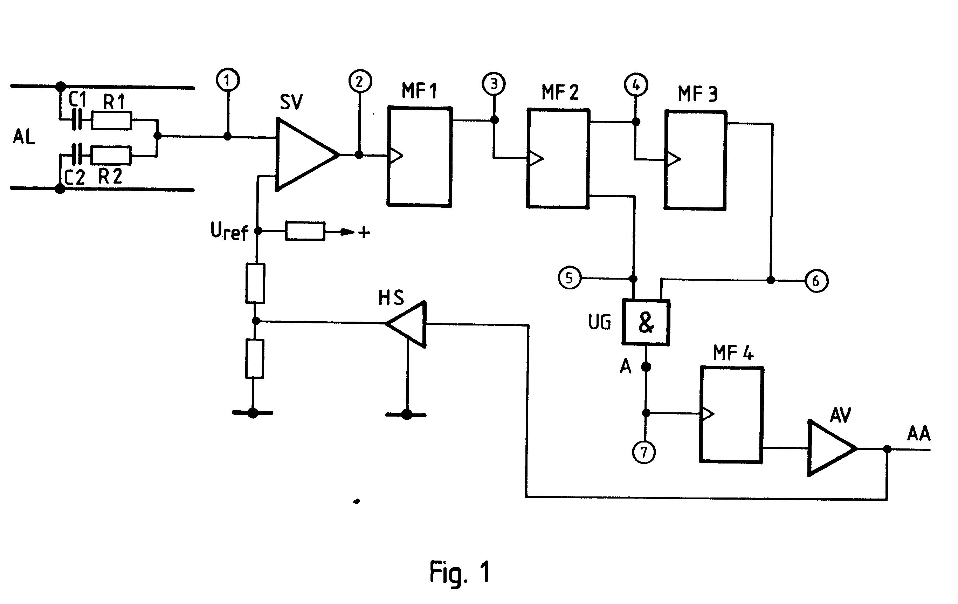

Die in der Fig. 1 dargestellte Prinzipschaltung besteht im wesentlichen aus drei hintereinander geschalteten, nachtriggerbaren monostabilen Flip-Flops MF1, MF2 und MF3. Der über eine Anschlußleitung AL ankommende Gebührenimpuls wird über ein aus Kondensatoren C1,C2 und Widerständen R1, R2 bestehendes Netzwerk einem Schwellwertverstärker SV zugeführt. Dieser Schwellwertverstärker SV hat eine durch eine Referenzspannung Uref vorgegebene Ansprechschwelle. Er gibt also immer dann einen Impuls an das erste monostabile Flip-Flop MF1 weiter, wenn der Pegel auf der Anschlußleitung einen vorbestimmten Wert überschreitet. Durch das vorbeschriebene Netzwerk, womit eine dämpfungsarme Ankopplung des Gebührenimpulsempfängers an die Anschlußleitung AL erreicht wird, und die Ansprechschwelle des Schwellwertverstärkers SV ist der Eingang des Gebührenimpulsempfängers so ausgelegt, daß dieser auf die bei der Sprachübertragung entstehenden Wechselspannungen nicht ansprechen kann.

Wie aus der Fig. 1 hervor geht, ist dem ersten monostabilen Flip-Flop MF1, dessen Zeitkonstante so bemessen ist, daß sie der Dauer einer Periode der oberen Grenzfrequenz entspricht, ein zweites monostabiles Flip-Flop MF 2 nachgeschaltet. Die Zeitkonstante dieses zweiten monostabilen Flip-Flops MF2 ist so bemessen, daß sie einer Periode der unteren Grenzfrequenz angepaßt ist. Am Ausgang des zweiten monostabilen Flip-Flops MF2 ist ein drittes monostabiles Flip-Flop MF3 angeschlossen, dessen Zeitkonstante größer ist als die Zeitkonstante des zweiten monostabilen Flip-Flops MF2 und auch größer ist als die Minimallänge eines Gebührenimpulses. Die Ausgänge des zweiten und des dritten monostabilen Flip-Flops MF2 und MF3 sind so mit den Eingängen eines UND-Verknüpfungsgatters UG verbunden, daß dieses nur dann anspricht, wenn das zweite monostabile Flip-Flop MF2 sich noch in seiner Arbeitslage befindet, während das dritte monostabile Flip-Flop MF3 bereits wieder in seine Ruhelage zurückgekehrt ist.

Durch ein an den Ausgang A des UND-Verknüpfungsgatters UG angeschlossenes weiteres monostabilen Flip-Flop MF4 wird aufgrund des empfangenen Gebührenimpulses ein Impuls mit definierter Länge abgegeben, der über einen Ausgangsverstärker AV einem Auswerteausgang AA zugeführt wird. Mit dem Ausgangssignal des Ausgangsverstärkers wird außerdem ein Hysterese-Schalter HS gesteuert, der eine Veränderung der Referenzspannung Uref bewirkt. Damit wird die Ansprechschwelle des Schwellwertverstärkers SV so verstellt, daß dieser bei einem vorübergehend schwächer werdendem Pegel des Gebührenimpulses nicht umschalten kann, sondern erst dann umschaltet, wenn der Gebührenimpuls beendet ist.

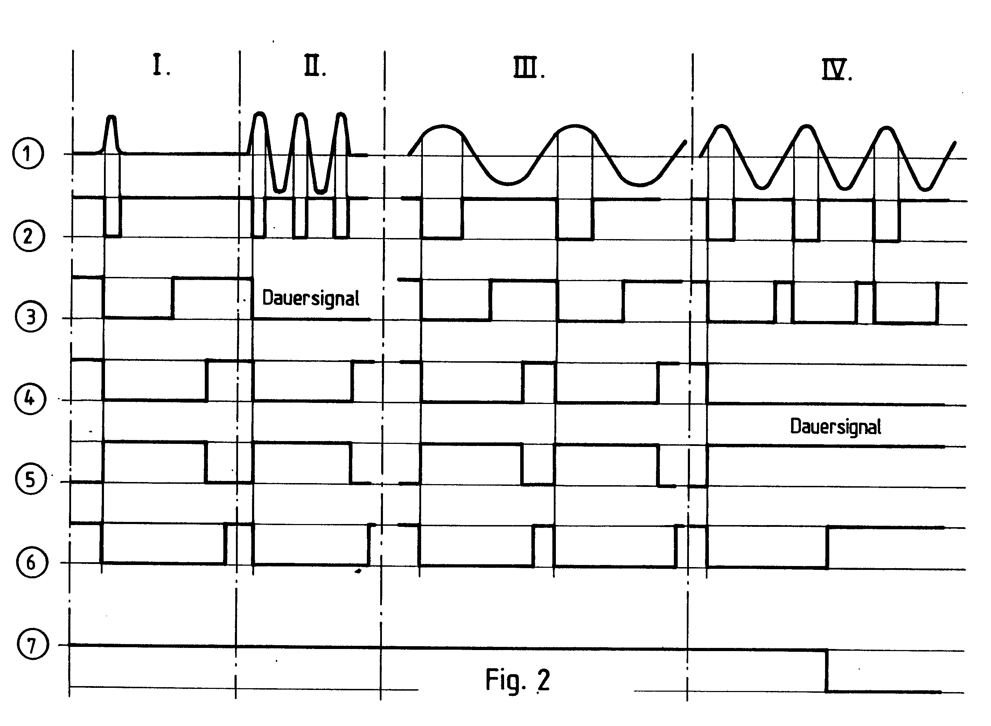

Anhand der Fig. 2 werden nun Verhaltensweisen des Gebührenimpulsempfängers beschrieben, wie sie bei auf der Anschlußleitung AL vorkommenden verschiedenen Impulsarten auftreten können. Dabei wird deutlich, daß der Gebührenimpulsempfänger nur dann ansprechen kann, wenn die Sollfrequenz innerhalb der üblichen Toleranzen auftritt. Die an einzelnen Punkten 1 bis 7 der in der Fig. 1 dargestellten Schaltungsanordnung auftretenden Potentiale sind in entsprechender Reihenfolge in der Fig. 2 dargestellt. Diese Punkte 1 bis 7 können auch als Meßpunkte tatsächlich vorhanden sein.

Im ersten mit I bezeichneten Beispiel der Fig. 2 wird angenommen, daß ein einzelner Impuls am Eingang des Schwellwertverstärkers SV auftritt. Bei entsprechendem Pegel spricht der Schwellwertverstärker SV an, so daß am Punkt 2 ein zeitlich entsprechendes Signal erscheint. Durch dieses Signal wird das erste monostabile Flip-Flop MF1 in seine Arbeitslage geschaltet, so daß an seinem Ausgang 3 für die Dauer seiner Zeitkonstante das entsprechende Impulsbild erscheint. Gleichzeitig sprechen auch die nachgeschalteten monostabilen Flip-Flops MF2 und MF3 an, die jeweils für die Dauer ihrer Zeitkonstanten in ihren Arbeitsstellungen verbleiben. Da die Zeitkonstanten der beiden zuletzt genannten monostabilen Flip-Flops MF2 und MF3 so bemessen sind, daß das zweite monostabile Flip-Flop MF2 früher zurückkippt als das dritte monostabile Flip-Flop MF3, kann das UND-Verknüpfungsgatter UG nicht ansprechen. Die Eingangssignale 5 und 6 sind also in einer solchen Polarität vorhanden, daß am Ausgang A, entsprechend Punkt 7, kein Ausgangssignal erscheinen kann.

Im zweiten mit II bezeichneten Falls sei angenommen, daß ein Impuls zwar mit ausreichender Länge jedoch mit einer zu hohen Frequenz auf der Anschlußleitung AL erscheint. Das am Eingang 1 erscheinende Signal wird in entsprechender Länge, also den positiven Halbwellen entsprechend vom Schwellwertverstärker erkannt, so daß sich das unter Punkt 2 dargestellte Impulsbild ergibt. Das erste monostabile Flip-Flop MF1 spricht dabei an und wird laufend nachgetriggert, weil die Impulse an Punkt 2 in schnellerer Folge erscheinen, als die für den echten Gebührenimpuls vorgegebene Frequenz, so daß das erste Flip-Flop an seinem Ausgang Punkt 3 ein Dauersignal erscheinen läßt. Daraufhin spricht das zweite monostabile Flip-Flop MF2 nur ein einziges Mal an und kippt nach Ablauf seiner Zeitkonstante wieder zurück. Es ergeben sich danach die gleichen Verhältnisse, wie dies zuvor beim Auftreten eines einzelnen Impulses geschildert wurde. Auch in diesem Fall spricht der Gebührenimpulsempfänger (Punkt 7) nicht an.

Es sei nun angenommen, daß, wie dies unter III dargestellt ist, eine Frequenz auftritt, die kleiner ist als die für einen Gebührenimpuls vorgegebene Frequenz. Wie zuvor beschrieben worden ist, folgt das Impulsbild bei Punkt 2 den Pegeln der positiven Halbwellen. Jeweils mit dem Ansprechen des Schwellwertverstärkers SV werden nacheinander aber quasi zeitgleich alle drei monostabilen Flip-Flops MF1, MF2 und MF3, wie dies auch bei dem zuvor beschriebenen Beispielen der Fall war in ihre Arbeitslage gebracht. Da nun die Frequenz des Eingangssignals kleiner ist, also der zeitliche Abstand der Triggerimpulse für das erste monostabile Flip-Flop MF1 größer ist als dessen Zeitkonstante, kippt das erste monostabile Flip-Flop MF1 immer wieder in seine Ruhelage zurück. Das gleiche Verhalten zeigt das zweite monostabile Flip-Flop MF2 an seinen Ausgängen 4 und 5. Daraufhin arbeitet auch das dritte monostabile Flip-Flop MF3 in gleicher Weise, wie zuvor beschrieben worden ist. Es ergeben sich daraufhin an den Eingängen 5 und 6, sowie am Ausgang 7 des UND-Verknüpfungsgatters die gleichen Bedingungen, wie sie unter I und II beschrieben worden sind, so daß kein Ausgangssignal am Punkt 7 erscheint. Im unter IV dargestellten Teil der Fig. 2 wird angenommen, daß ein Gebührenimpuls mit der richtigen Frequenz von z.B. 50 Hz vorliegt. In den zuvor unter II und III beschriebenen Beispielen ist eine obere Grenzfrequenz von 60 Hz (II) und eine untere Grenzfrequenz von 40 Hz(III) angenommen. Dementsprechend betragen die Zeitkonstanten für das erste monostabile Flip-Flop MF1 beispielsweise 16,5 ms und für das zweite monostabile Flip-Flop MF2 25 ms. Das dritte monostabile Flip-Flop MF3 hat dementsprechend eine Zeitkonstante, die größter ist als 25 ms, im Beispiel 30 ms, wenn angenommen wird, daß die Mindestimpulslänge in dieser Größenordnung liegt.

Beim Vorliegen der Nennfrequenz von im Beispiel 50 Hz folgt wie zuvor beschrieben des Schwellwertverstärkers SV am Punkt 2 den positiven Halbwellen der Eingangsspannung. Da die Zeitkonstante des ersten monostabilen Flip-Flops MF1 kürzer ist als die Periodendauer dieser Frequenz kippt das monostabile Flip-Flop immer wieder in seine Ruhelage zurück, wie dies auch im Abschnitt III dargestellt ist. Da nun aber durch das Eingangssignal das erste monostabile Flip-Flop MF1 erneut in seine Arbeitslage gebracht wird, bevor das zweite monostabile Flip-Flop MF 2 in seine Ruhelage zurückkehren kann, also nachgetriggert wird, erscheint an dessen Ausgängen 4 und 5 ein Dauersignal. Wenn also das dritte monostabile Flip-Flop MF 3 in seine Ruhelage zurückkehrt, so befindet sich in diesem Fall das zweite monostabile Flip-Flop MF 2 noch in seiner Arbeitslage, so daß an den Eingängen 5 und 6 des UND-Verknüpfungsgatters UG gleiche Potentiale vorliegen, wodurch dieses an seinem Ausgang A bzw. Punkt 7 sein Potential ändert.

Nur in diesem Fall wird also ein viertes monostabiles Flip-Flop MF4 in seine Arbeitslage gebracht, wobei dessen Zeitkonstante so ausgelegt ist, daß am Auswerteausgang AA in Fig. 1 ein Signal erscheint, welches eine zur Auswertung geeignete ausreichende Länge hat.

Aufgrund der zuvor beschriebenen Eigenschaften des Gebührenimpulsempfängers spricht dieser nur an, wenn ein Impuls ausreichender Länge mit der richtigen Frequenz auf der Anschlußleitung AL angeboten wird. Die in Fig. 1 dargestellte prinzipielle Schaltungsanordnung läßt sich ohne weiteres in einem hoch integrierten Schaltkreis zusammenfassen, so daß ein Bauelement zur Verfügung steht, welches wenig Platz beansprucht. Dabei lassen sich auch die zur Bestimmung des Zeitkonstanten notwendigen Kapazitäten einbringen und die zugehörigen Widerstände auf höchste Genauigkeit abgleichen. Damit können die verschiedenen vorkommenden Frequenzen mit den zugehörigen Toleranzgrenzen eingestellt werden.

**Ansprüche**

1. Gebührenimpulsempfänger für Fernmelde-, insbesondere Fernsprechanschlußleitungen, womit die mit einer vorbestimmten Frequenz und einer vorgegebenen Impulslänge über eine Anschlußleitung ankommenden Gebührenimpulse, welche zur Anzeige und/oder Berechnung der Kosten einer Fernsprech- oder Datenverbindung dienen, empfangen und bewertet werden, wobei die Frequenz und die Impulslänge erkannt werden müssen, dadurch gekennzeichnet, daß zur Bestimmung der Frequenz und der Impulslänge mehrere in Reihe geschaltete nachtriggerbare monostabile Flip-Flops (MF1 bis MF3) vorgesehen sind, daß der einlaufende Gebührenimpuls an den Takteingang eines ersten monostabilen Flip-Flops (MF1) angeschaltet wird, dessen Zeitkonstante größer ist als eine Periode der maximal zulässigen Frequenz, daß davon ein zweites monostabiles Flip-Flop (MF2) gesteuert wird, dessen Zeitkonstante größer ist als eine Periode der minimal zulässigen Frequenz, daß vom Ausgang des zweiten monostabilen Flip-Flops (MF2) ein drittes monostabiles Flip-Flop (MF3) gesteuert wird, dessen Zeitkonstane größer ist als die des zweiten monostabilen Flip-Flops (MF2) und auch größer ist als die Mindestdauer eines Gebührenimpulses, und daß die Ausgänge des zweiten monostabilen Flip-Flops (MF2) und des dritten monostabilen Flip-Flops (MF3) über ein UND-Gatter (UG) miteinander verknüpft sind, an dessen Ausgang ein als einwandfrei erkannter Gebührenimpuls erscheint.

2. Gebührenimpulsempfänger nach Anspruch 1, dadurch gekennzeichnet, daß an den Ausgang des UND-Gatters (UG) ein weiteres monostabiles Flip-Flop (MF4) angeschlossen ist, dessen Zeitkonstante in Abhängigkeit von der Mindestdauer eines Impulses und des Impulsabstandes auf eine zur Weiterverarbeitung geeignete Mindestimpulslänge einstellbar ist, und daß ein derartiger Impuls am Ausgang (AA) abgegeben wird.

3. Gebührenimpulsempfänger nach Anspruch 1, dadurch gekennzeichnet, daß an den Eingang des ersten monostabilen Flip-Flops (MF1) ein Schwellwertverstärker (SV) angeschlossen ist, der die Eingangsspannung eines Gebührenimpulses mit einer Referenzspannung (Uref) vergleicht.

4. Gebührenimpulsempfänger nach Anspruch 3, dadurch gekennzeichnet, daß die Referenzspannung (Uref) für den Schwellwertverstärker (SV) durch das am Ausgang (AA) erscheinende Signal verändert wird, so daß sich ein Hysterese-Verhalten ergibt.

EP 0 318 648 A2

Fig. 1

Fig. 2